# EUROPEAN PATENT APPLICATION

(11) **EP 4 847 566 A1**
(43) Date of publication of application: **02.12.2026**
(21) Application number: 25744951.2
(22) Date of filing: 17.01.2025
(51) Int. Cl.: C08L 101/00, C08K 3/013, C08K 3/016, C08K 7/02

(54) **FLAME-RETARDANT RESIN COMPOSITION**

(30) Priority: 23.01.2024 JP 2024007884
(71) Applicant: Sumitomo Bakelite Co.Ltd., Shinagawa-ku Tokyo 140-0002 (JP)
(72) Inventor: KOIDE Kazu, Tokyo 140-0002 (JP); IYORI Yasuaki, Tokyo 140-0002 (JP); INOKUCHI Hideaki, Tokyo 140-0002 (JP); IGAWA Ryoichi, Tokyo 140-0002 (JP)
(74) Representative: Ter Meer und Partner mbB
(86) International application number: PCT/JP2025/001373
(87) International publication number: WO 2025/159022

(57) **Abstract**

A flame-retardant resin composition of the present invention contains a thermosetting resin and a flame retardant, in which ΔEr obtained by the following procedure is 30 or less. Procedure: (i) forming a test plate (having a size of 120 mm by 120 mm and a thickness of 2 mm) by using the flame-retardant resin composition under conditions of a mold temperature of 175°C and a curing time of 3 minutes; (ii) applying a torch burner (30 mm with respect to a flame length of approximately 100 mm) to a center of one surface of the test plate placed vertically such that an angle with respect to the test plate is 90°, and exposing the test plate to flame for 5 minutes; and (iii) measuring, for a center of another surface of the test plate and two points located on a straight line passing through the center of the other surface and at a distance of 3 mm from the center, color differences before the flame exposure and after the flame exposure, and determining an average value (ΔEr) of the color differences.

## Description

### TECHNICAL FIELD

The present invention relates to a flame-retardant resin composition. More specifically, the present invention relates to a flame-retardant resin composition and a vehicle-mounted component including a cured product of the flame-retardant resin composition.

### BACKGROUND ART

In recent years, from the viewpoint of environmental protection, development of electric vehicles or hybrid vehicles driven by electric motors has been actively pursued. In battery packs mounted in such electric vehicles, hybrid vehicles, and the like, there have been cases in which ignition of one of a plurality of batteries causes adjacent batteries to ignite one after another. Accordingly, for example, Patent Document 1 (Japanese Unexamined Patent Publication No. 2023-146688) discloses covering an outer side of a case accommodating the batteries with a resin containing a flame retardant.

Meanwhile, as one technique for improving flame retardancy of a resin composition, there has been proposed an approach in which a compound referred to as a flame retardant is incorporated. As an example of the flame retardant used in the resin composition, inorganic flame retardants such as metal hydroxides are known (see, for example, Patent Document 2 (International Publication No. 2020/080149)).

Here, in the related art, UL 94 standard has been known as one of indices indicating the flame retardancy. The UL 94 standard is a standard for evaluating flame retardancy of a plastic product, and is widely adopted throughout the world. Classifications of the UL 94 standard include, in descending order of flame retardancy, 5VA, 5VB, V-0, V-1, V-2, and HB; and, for example, in the V-0 test, flame exposure is performed twice for 10 seconds each time.

### RELATED DOCUMENT

### PATENT DOCUMENT

[Patent Document 1] Japanese Unexamined Patent Publication No. 2023-146688
[Patent Document 2] International Publication No. 2020/080149

### SUMMARY OF THE INVENTION

### TECHNICAL PROBLEM

With increases in safety awareness, growing demands for higher performance, and the like, demands for flame retardancy required of flame-retardant materials have been increasing. Accordingly, conventional flame-retardant materials such as those disclosed in Patent Documents 1 and 2 still have room for improvement in terms of obtaining higher flame retardancy.

### SOLUTION TO PROBLEM

As a result of intensive studies conducted in order to achieve higher flame retardancy, the present inventors found that, even when flame retardancy according to the UL 94 standard is favorable, the flame retardancy is insufficient when the flame exposure is continued for a longer period of time or when the flame is stronger. As a result of further studies, the present inventors have devised a new index relating to the flame retardancy, found that it is effective to produce a flame-retardant resin composition so as to satisfy the index, and thus completed the present invention.

According to the present invention, the following flame-retardant resin composition and a technique related thereto are provided.
[1] A flame-retardant resin composition containing a thermosetting resin and a flame retardant, in which ΔEr obtained by the following procedure is 30 or less,
   Procedure:
   (i) forming a test plate (having a size of 120 mm by 120 mm and a thickness of 2 mm) by using the flame-retardant resin composition under conditions of a mold temperature of 175°C and a curing time of 3 minutes;
   (ii) applying a torch burner (30 mm with respect to a flame length of approximately 100 mm) to a center of one surface of the test plate placed vertically such that an angle with respect to the test plate is 90°, and exposing the test plate to flame for 5 minutes; and
   (iii) measuring, for a center of another surface of the test plate and two points located on a straight line passing through the center of the other surface and at a distance of 3 mm from the center, color differences before the flame exposure and after the flame exposure, and determining an average value (ΔEr) of the color differences.
[2] The flame-retardant resin composition according to [1],
   in which the flame retardant includes one or more selected from an organic flame retardant and an inorganic flame retardant.
[3] The flame-retardant resin composition according to [1] or [2], further containing
   an inorganic filler.
[4] The flame-retardant resin composition according to any one of [1] to [3],
   in which ΔEf is 0 to 100, ΔEf being obtained by measuring, for the center of the one surface of the test plate obtained in (ii) of the procedure and two points located on a straight line passing through the center of the one surface and at a distance of 3 mm from the center, color differences before the flame exposure and after the flame exposure, and determining an average value (ΔEf) of the color differences.
[5] The flame-retardant resin composition according to any one of [1] to [4],
   in which a content of the flame retardant is 1 to 45 parts by mass with respect to 100 parts by mass of the flame-retardant resin composition.
[6] The flame-retardant resin composition according to any one of [1] to [5],
   in which the thermosetting resin includes one or more selected from a phenolic resin, a diallyl phthalate resin, an unsaturated polyester resin, an epoxy resin, a melamine resin, and a furan resin.
[7] The flame-retardant resin composition according to [3],
   in which the inorganic filler is one or more selected from a fibrous filler, a plate-like filler, and a spherical filler.
[8] The flame-retardant resin composition according to [3] or [7],
   in which the inorganic filler is one or more selected from a glass fiber, a carbon fiber, a metal fiber, and a mineral filler.
[9] The flame-retardant resin composition according to [3], [7], or [8],
   in which a content of the inorganic filler is 30 to 85 parts by mass with respect to 100 parts by mass of the flame-retardant resin composition.
[10] The flame-retardant resin composition according to any one of [1] to [9],
   in which, when the flame-retardant resin composition is formed into a test plate (having a size of 125 mm × 13 mm and a thickness of 0.75 mm) under conditions of a mold temperature of 175°C and a curing time of 3 minutes, the flame-retardant resin composition meets V-1 of UL-94 standard in a test conducted in accordance with the UL-94 standard.
[11] The flame-retardant resin composition according to any one of [1] to [10],
   in which the flame-retardant resin composition is used for a vehicle-mounted component.
[12] A cured product of the flame-retardant resin composition according to any one of [1] to [11].
[13] A vehicle-mounted component including the cured product of the flame-retardant resin composition according to [11].

### ADVANTAGEOUS EFFECTS OF INVENTION

According to the present invention, a flame-retardant resin composition having improved flame retardancy is provided.

### BRIEF DESCRIPTION OF THE DRAWINGS

FIG. 1 is a photographic view showing results of a flame retardancy evaluation of a test plate in Example 1.
FIG. 2 is a photographic view showing results of a flame retardancy evaluation of a test plate in Example 2.
FIG. 3 is a photographic view showing results of a flame retardancy evaluation of a test plate in Comparative Example 1.
FIG. 4 is a photographic view showing results of a flame retardancy evaluation of a test plate in Comparative Example 2.

### DESCRIPTION OF EMBODIMENTS

Hereinafter, embodiments of the present invention will be described in detail.

In the present specification, a denotation "a to b" in the description of a numerical range represents a or more and b or less, unless specified otherwise. For example, "1% to 5% by mass" means "1% by mass or more and 5% by mass or less".

### <Flame-retardant resin composition>

The flame-retardant resin composition according to the present embodiment contains a thermosetting resin and a flame retardant, in which ΔEr obtained by the following procedure is 30 or less.

Procedure:
(i) forming a test plate (having a size of 120 mm by 120 mm and a thickness of 2 mm) by using the flame-retardant resin composition under conditions of a mold temperature of 175°C and a curing time of 3 minutes;
(ii) applying a torch burner (30 mm with respect to a flame length of approximately 100 mm) to a center of one surface of the test plate placed vertically such that an angle with respect to the test plate is 90°, and exposing the test plate to flame for 5 minutes; and
(iii) measuring, for a center of another surface of the test plate and two points located on a straight line passing through the center of the other surface and at a distance of 3 mm from the center, color differences before the flame exposure and after the flame exposure, and determining an average value (ΔEr) of the color differences.

As a result, flame retardancy of the flame-retardant resin composition can be effectively improved. In other words, the ΔEr is a new index devised by the present inventors, and high flame retardancy can be obtained by producing the flame-retardant resin composition so as to satisfy this index.

Here, as one index of the flame retardancy, for example, the UL 94 standard can be mentioned. The heat output of a burner used in V-0 of the standard is 0.05 kW, whereas the heat output of the torch burner used in (ii) of the above-described procedure of the present embodiment is 2 to 4 kW. In addition, the ΔEr is a color difference before and after the flame exposure at three predetermined points on a non-flame-exposed surface of the test plate. That is, a low value of the ΔEr means that discoloration on a back surface of the test plate is small before and after the flame exposure of the surface of the test plate; and this indicates that the test plate is less likely to burn when exposed to flame. In other words, when flame retardancy is low, the flame and heat easily reach the back surface (the non-flame-exposed surface), and discoloration and ashing on the back surface of the test plate also increase.

Therefore, the flame-retardant resin composition according to the present embodiment achieves high flame retardancy against flame having a higher heat output by controlling the ΔEr obtained by the above-described procedure, from a viewpoint different from the viewpoint in the related art.

The ΔEr is 30 or less, preferably 25 or less, and more preferably 22 or less.

By setting the ΔEr to be equal to or less than the above-described upper limit value, higher flame retardancy is obtained.

Further, when measuring, for the center of the one surface of the test plate obtained in (ii) of the procedure and two points located on a straight line passing through the center of the one surface and at a distance of 3 mm from the center, color differences before the flame exposure and after the flame exposure, and determining an average value (ΔEf) of the color differences, the ΔEf is preferably 1 to 100, more preferably 10 to 80, and still more preferably 20 to 70.

By setting the ΔEf to be equal to or less than the above-described upper limit value, higher flame retardancy is obtained.

More specifically, the ΔEf is a color difference before and after the flame exposure at three predetermined points on a flame-exposed surface of the test plate. That is, a low value of the ΔEf means that discoloration on a front surface of the test plate is small before and after the flame exposure of the surface of the test plate; and this indicates that the test plate is less likely to burn when exposed to flame.

In (ii) described above, the torch burner is applied toward the center point of the test plate, and the flame applied to the test plate may spread approximately 20 mm from the center point (approximately 40 mm in diameter).

In addition, in (iii) described above, the color-difference measurement points are a total of three points, namely, the center of the test plate and two point-symmetric points located at a distance of 3 mm from the center. The color difference after the flame exposure is measured after the temperature of the test plate returns to room temperature.

The ΔE (ΔEr and ΔEf) can be achieved by adjusting selection and blending of materials constituting the flame-retardant resin composition or by devising a production method. Details will be described later, but examples thereof include selection of an organic flame retardant, selection of a type of an inorganic filler, adjustment of a blending ratio of the inorganic filler and the thermosetting resin, and control of the number of roll-kneading passes when the respective materials are mixed.

The color difference (ΔE) is measured as follows.

For set measurement points, chromaticity coordinates (L^{*}, a^{*}, b^{*}) defined in a CIE1976 L^{*}a^{*}b^{*} color system are measured using a color difference meter. Chromaticity coordinates measured on the test plate before the flame exposure are set as (L^{*}0, a^{*}0, b^{*}0); chromaticity coordinates measured on the test plate after the flame exposure are set as (L^{*}1, a^{*}1, b^{*}1); and each obtained value is applied to the following formula to calculate the ΔE. $ΔEr = {\left[{\left(L*1-L*0\right)}^{2}+{\left(a*1-a*0\right)}^{2}+{\left(b*1-b*0\right)}^{2}\right]}^{1 / 2}$

In addition, the flame-retardant resin composition according to the present embodiment preferably meets V-1 of the UL-94 standard. As a result, high flame retardancy is obtained more stably. Specifically, a test plate (having a size of 125 mm × 13 mm and a thickness of 0.75 mm) is formed by using the flame-retardant resin composition according to the present embodiment under conditions of a mold temperature of 175°C and a curing time of 3 minutes, and a test is conducted in accordance with the UL-94 standard.

Components constituting the flame-retardant resin composition will be described below.

### [Flame retardant]

The flame retardant is a compound used to impart flame retardancy to the thermosetting resin.

Flame retardants are classified into an organic flame retardant and an inorganic flame retardant according to their constituent components. In the flame-retardant resin composition according to the present embodiment, the flame retardant may be an organic flame retardant, an organic flame retardant, or a mixture thereof.

### (Organic flame retardant)

Examples of the organic flame retardant include a phosphorus-based flame retardant, a silicone-based flame retardant, and a halogen-based flame retardant. Among these, the organic flame retardant preferably includes a phosphorus-based flame retardant or a silicone-based flame retardant.

The phosphorus-based flame retardant forms a char upon combustion.

Examples of the phosphorus-based flame retardant include one or more selected from red phosphorus; phosphoric acid esters such as trimethyl phosphate (TMP), triethyl phosphate (TEP), triphenyl phosphate (TPP), trixylenyl phosphate (TXP), tributyl phosphate (TBP), tricresyl phosphate (TCP), and cresyl diphenyl phosphate (CDP); halogen-containing organophosphorus compounds such as tris(2-chloroethyl) phosphate (TCEP), tris(1-chloro-2-propyl) phosphate (TCPP), and tris(1,3-dichloro-2-propyl) phosphate (TDCPP); polychlorophosphonate; polyphosphate-based flame retardants such as ammonium polyphosphate (APP); polyinorganic phosphate-based flame retardants; and the like.

A silicone compound, which is the silicone-based flame retardant, improves flame retardancy by a chemical reaction upon combustion. Examples of the silicone compound include one or more selected from a silicone resin, a silicone rubber, a silicone oil, and the like.

Examples of the silicone compound include a resin having a three-dimensional network structure formed by combining structural units of SiO₂, R-SiO_{3/2}, R-SiO, and R-SiO_{1/2}. R represents an alkyl group such as a methyl group, an ethyl group, and a propyl group; an aromatic group such as a phenyl group and a benzyl group; or a substituent in which any of the substituent contains a vinyl group.

The silicone compound may be linear or may have a branched structure. In addition, an organic residue bonded to a silicon atom preferably has 1 to 30 carbon atoms, more preferably 1 to 20 carbon atoms. Specific examples of such an organic residue include an alkyl group such as a methyl group, an ethyl group, a propyl group, a butyl group, a hexyl group, and a decyl group; a cycloalkyl group such as a cyclohexyl group; an aryl group such as a phenyl group; and an aralkyl group such as a tolyl group. The organic residue is more preferably an alkyl group, an alkenyl group, or an aryl group, each having 1 to 8 carbon atoms.

### (Inorganic flame retardant)

Examples of the inorganic flame retardant include one or more selected from a metal hydroxide-based flame retardant, a boron-based flame retardant, and an antimony oxide-based flame retardant.

The metal hydroxide-based flame retardant generates a small amount of smoke upon combustion and can release water at high temperatures. Examples of the metal hydroxide-based flame retardant include one or more selected from magnesium hydroxide, aluminum hydroxide, barium hydroxide, and calcium hydroxide.

Examples of the boron-based flame retardant include one or more selected from calcium borate and zinc borate.

Examples of the antimony oxide-based flame retardant include one or more selected from antimony trioxide and antimony pentoxide.

Among these, magnesium hydroxide, aluminum hydroxide, or zinc borate is preferable as the inorganic flame retardant.

A content of the flame retardant is preferably 1 to 45 parts by mass, more preferably 2 to 40 parts by mass, and still more preferably 3 to 35 parts by mass with respect to 100 parts by mass of the flame-retardant resin composition.

By setting the content of the flame retardant to be equal to or more than the above-described lower limit value, the flame retardancy is easily improved. On the other hand, by setting the content of the flame retardant to be equal to or less than the above-described upper limit value, the thermosetting resin can more readily exhibit its function while maintaining the flame retardancy.

When the organic flame retardant is used, a content thereof is preferably 1 to 20 parts by mass, more preferably 2 to 15 parts by mass, and still more preferably 3 to 10 parts by mass with respect to 100 parts by mass of the flame-retardant resin composition.

By setting the content of the organic flame retardant to be equal to or more than the above-described lower limit value, the flame retardancy is easily improved. On the other hand, by setting the content of the organic flame retardant to be equal to or less than the above-described upper limit value, the thermosetting resin can more readily exhibit its function while maintaining the flame retardancy.

When the inorganic flame retardant is used, a content thereof is preferably 10 to 45 parts by mass, more preferably 15 to 40 parts by mass, and still more preferably 18 to 35 parts by mass with respect to 100 parts by mass of the flame-retardant resin composition.

By setting the content of the inorganic flame retardant to be equal to or more than the above-described lower limit value, the flame retardancy is easily improved. On the other hand, by setting the content of the inorganic flame retardant to be equal to or less than the above-described upper limit value, the thermosetting resin can more readily exhibit its function while maintaining the flame retardancy.

### (Thermosetting resin)

Examples of the thermosetting resin include one or more selected from a phenolic resin, a diallyl phthalate resin, an unsaturated polyester resin, an epoxy resin, a melamine resin, and a furan resin. Among these, a phenolic resin is preferable.

Specific examples of the above-described phenolic resin include a novolac-type phenolic resin, a resol-type phenolic resin, and an aryl alkylene-type phenolic resin. As the phenolic resin, one of these resins may be used alone, two or more thereof having different weight-average molecular weights may be used in combination, or one or more thereof may be used in combination with their prepolymers. Among these, a resol-type phenolic resin is preferable.

The above-described diallyl phthalate resin is a prepolymer synthesized from a diallyl phthalate monomer or a diallyl isophthalate monomer. Depending on whether the monomer is orthophthalic or isophthalic, the resin may be a diallyl orthophthalate resin or a diallyl isophthalate resin.

Heat resistance can be improved by using a diallyl phthalate resin containing, as a constituent monomer, diallyl phthalate that is an ester of phthalic acid and allyl alcohol, and having a structure polymerized at an allyl group of the diallyl phthalate, particularly by using a diallyl isophthalate resin in which the phthalic acid is isophthalic acid.

Furthermore, tracking resistance can be improved by keeping a content of the diallyl isophthalate resin relatively low and a content of aluminum hydroxide relatively high, whereby the tracking resistance and the flame retardancy can be achieved together at a higher level.

In the present embodiment, the diallyl isophthalate resin includes not only one containing, as a constituent monomer, diallyl isophthalate that is an ester of isophthalic acid and allyl alcohol and having a structure polymerized at allyl groups of the diallyl isophthalate, but also one in which at least part of the diallyl isophthalate as a constituent monomer is replaced with a compound in which at least part of hydrogen atoms on a benzene ring of isophthalic acid is substituted by halogen atoms such as chlorine and bromine, or with a compound in which all or part of unsaturated bonds present in the molecule of diallyl isophthalate or substituted diallyl isophthalate are hydrogenated.

Specific examples of the epoxy resin include a biphenyl-type epoxy resin; a bisphenol-type epoxy resin such as a bisphenol A-type epoxy resin, a bisphenol F-type epoxy resin, a bisphenol AD-type epoxy resin, and a tetramethylbisphenol F-type epoxy resin; a stilbene-type epoxy resin; a novolac-type epoxy resin such as a phenol novolac-type epoxy resin and a cresol novolac-type epoxy resin; a polyfunctional epoxy resin such as a triphenyl-type epoxy resin exemplified by a triphenolmethane-type epoxy resin and an alkyl-modified triphenolmethane-type epoxy resin; phenol aralkyl-type epoxy resins such as a phenol aralkyl-type epoxy resin having a phenylene skeleton, a naphthol aralkyl-type epoxy resin having a phenylene skeleton, a phenol aralkyl-type epoxy resin having a biphenylene skeleton (a biphenyl aralkyl-type epoxy resin), and a naphthol aralkyl-type epoxy resin having a biphenylene skeleton; a naphthol-type epoxy resin such as a dihydroxynaphthalene-type epoxy resin and an epoxy resin obtained by glycidyl etherification of a dimer of dihydroxynaphthalene; a triazine ring-containing epoxy resin such as triglycidyl isocyanurate and monoallyl diglycidyl isocyanurate; a bridged cyclic hydrocarbon-modified phenol-type epoxy resin such as a dicyclopentadiene-modified phenol-type epoxy resin; a brominated epoxy resin such as a brominated bisphenol A-type epoxy resin and a brominated phenol novolac-type epoxy resin; and a tris(hydroxyphenyl)methane-type epoxy resin. As the epoxy resin, one of these resins may be used alone, or two or more different resins may be used in combination.

Specific examples of the unsaturated polyester resin include a thermosetting resin obtained by reacting and condensing an unsaturated dibasic acid such as maleic anhydride and a saturated dibasic acid such as phthalic anhydride with glycols, and such resin is generally used in a form of being dissolved in a polymerizable monomer such as styrene.

More specific examples of the unsaturated polyester resin include one or more phthalic acid-based unsaturated polyester resins selected from the group consisting of an ortho-type obtained by reacting and condensing phthalic anhydride or orthophthalic acid with glycols, an iso-type obtained by reacting and condensing isophthalic acid with glycols, and a para-type obtained by reacting and condensing terephthalic acid with glycols, as the saturated dibasic acid and the glycolic acid among raw materials.

The unsaturated polyester resin is preferably one or more phthalic acid-based unsaturated polyester resins selected from the group consisting of a tere-type obtained by reacting terephthalic acid with glycols and an iso-type obtained by reacting isophthalic acid with glycols.

The unsaturated polyester resin includes, for example, at least one of the above-described tere-type phthalic acid-based unsaturated polyester resin and the above-described iso-type phthalic acid-based unsaturated polyester resin. In addition, the unsaturated polyester resin may include the above-described tere-type phthalic acid-based unsaturated polyester resin and the above-described iso-type phthalic acid-based unsaturated polyester resin. When the unsaturated polyester resin includes the tere-type phthalic acid-based unsaturated polyester resin and the iso-type phthalic acid-based unsaturated polyester resin, a proportion of the iso-type phthalic acid-based unsaturated polyester resin is, for example, 40 parts by mass or more, and may be 50 parts by mass or more, or 55 parts by mass or more; and is specifically less than 100 parts by mass, or, for example, 80 parts by mass or less, with respect to 100 parts by mass in total of the tere-type and the iso-type.

A content of the thermosetting resin is preferably 10 to 50 parts by mass, more preferably 15 to 45 parts by mass, and still more preferably 20 to 38 parts by mass with respect to 100 parts by mass of the flame-retardant resin composition.

By setting the content of the thermosetting resin to be equal to or more than the above-described lower limit value, the flame retardancy and processability can be improved.

By setting the content of the thermosetting resin to be equal to or less than the above-described upper limit value, the UL-94 standard can be satisfied more readily at a higher level while maintaining the flame retardancy against flame having a high heat output.

### [Inorganic filler]

The flame-retardant resin composition may further contain an inorganic filler.

The inorganic filler is an inorganic substance excluding the above-described inorganic flame retardant; and is used, for example, for increasing a mechanical strength of a cured product of the flame-retardant resin composition and/or improving the flame retardancy.

In terms of its shape, the inorganic filler is preferably one or more selected from a fibrous filler, a plate-like filler, and a spherical filler.

The fibrous filler is a short fiber, and examples thereof include one or more selected from metal fibers, carbon fibers, glass fibers, and ceramic fibers. Among these, metal fibers, carbon fibers, or glass fibers are preferable, and glass fibers are more preferable.

The plate-like filler may be, for example, a filler having an aspect ratio of 3 or more; and the spherical filler may be a true sphere or a substantially true sphere and may be, for example, a filler having an aspect ratio of less than 3.

Examples of a constituent material of the spherical or plate-like filler include minerals such as talc, mica, halloysite, kaolin, illite, montmorillonite, vermiculite, palygorskite, pyrophyllite, beidellite, nontronite, saponite, hectorite, sauconite, calcium silicate, aluminum silicate, wollastonite, glass flakes, molybdenum sulfide, and wollastonite; sulfates such as potassium sulfate, aluminum sulfate, sodium sulfite, calcium sulfate, and barium sulfate; carbonates such as calcium carbonate and magnesium carbonate; metal oxides such as aluminum oxide (alumina); crystalline silica, fused silica, and surface-treated silica; and glass beads. One of the above kinds may be used alone, or two or more thereof may be used in combination. For example, the fibrous filler and the plate-like filler may be used in combination.

A content of the inorganic filler is preferably 30 to 85 parts by mass, more preferably 35 to 80 parts by mass, and still more preferably 38 to 75 parts by mass, with respect to 100 parts by mass of the flame-retardant resin composition.

By setting the content of the inorganic filler to be equal to or more than the above-described lower limit value, flame retardancy against a higher heat output can be improved while obtaining flame retardancy according to the UL 94 standard.

On the other hand, by setting the content of the inorganic filler to be equal to or less than the above-described upper limit value, favorable flame retardancy against a high heat output can be obtained.

### [Others]

Furthermore, the flame-retardant resin composition may contain known compounds depending on the intended use.

Examples of the known compound include additives such as a curing aid, a polymerization initiator, a polymerization inhibitor, a curing agent, a coupling agent, a surfactant, a curing accelerator, an elastomer, a pigment, and an adhesion improver. One of these may be contained alone, or two or more thereof may be contained.

### (Curing aid)

As the curing aid, curing aids known in the field of resin compositions may be used. Examples thereof include oxides or hydroxides of alkaline earth metal, such as magnesium oxide, calcium hydroxide, and barium hydroxide; and aromatic carboxylic acids such as salicylic acid and benzoic acid. These oxides or hydroxides of alkaline earth metal may also be used as the inorganic flame retardant.

When the curing aid is used, a content of the curing aid is preferably, for example, 1 to 10 parts by mass with respect to 100 parts by mass of the thermosetting resin.

### (Polymerization initiator)

The polymerization initiator is used to initiate polymerization. As the polymerization initiator, an organic peroxide is preferable.

Examples of the organic peroxide include one or more selected from ketone peroxide, peroxy ketal, hydroperoxide, hydroxyperoxide, diallyl peroxide, diacyl peroxide, peroxy ester, and peroxy dicarbonate.

When the polymerization initiator is used, a content of the polymerization initiator is preferably, for example, 1 to 10 parts by mass, and more preferably 1 to 5 parts by mass, with respect to 100 parts by mass of the thermosetting resin.

### (Curing agent)

The curing agent is selected according to the type of the thermosetting resin, and is not particularly limited as long as it reacts with the thermosetting resin. Specific examples of the curing agent include a polyaddition-type curing agent, a catalyst-type curing agent, and a condensation-type curing agent.

Specific examples of the curing agent include phenol-based curing agents; amines; polyoxystyrenes such as poly-p-oxystyrene; acid anhydrides including alicyclic acid anhydrides such as hexahydrophthalic anhydride (HHPA) and methyltetrahydrophthalic anhydride (MTHPA), and aromatic acid anhydrides such as trimellitic anhydride (TMA), pyromellitic anhydride (PMDA), and benzophenonetetracarboxylic dianhydride (BTDA); polymercaptan compounds such as polysulfides, thioesters, and thioethers; isocyanate compounds such as isocyanate prepolymers and blocked isocyanates; organic acids such as carboxylic acid-containing polyester resins; and hexamethylenetetramine. Among these, one type may be used alone, or two or more types may be used in combination.

The contents of the thermosetting resin and the curing agent are appropriately set according to the types of the thermosetting resin and the curing agent.

### (Coupling agent)

When the inorganic filler is contained, a coupling agent may be further contained. As a result, it is possible to suppress the aggregation of the inorganic filler and obtain favorable fluidity.

Examples of the coupling agent include various silane-based compounds such as epoxysilane, mercaptosilane, aminosilane, alkylsilane, ureide silane, and vinylsilane, and known coupling agents such as a titanium-based compound, an aluminum chelate, and an aluminum-zirconium-based compound.

### (Elastomer)

Examples of the elastomer include acrylonitrile butadiene rubber, isoprene, styrene butadiene rubber, and ethylene propylene rubber. Among these, acrylonitrile butadiene rubber is preferable. By using the elastomer, toughness of the cured product of the flame-retardant resin composition can be increased.

When the elastomer is used, a content of the elastomer is preferably, for example, 2 to 15 parts by mass with respect to 100 parts by mass of the thermosetting resin.

### (Release agent)

Examples of the release agent include a fatty acid such as stearic acid, a fatty acid salt such as calcium stearate and zinc stearate, a fatty acid amide, and polyethylene.

When the release agent is used, a content of the release agent is, for example, 1 to 10 parts by mass, preferably 2 to 8 parts by mass with respect to 100 parts by mass of the thermosetting resin.

### (Pigment)

Examples of the pigment include carbon black. In addition, various coloring pigments and the like may also be used in order to obtain a molded article having a desired color.

When the pigment is used, an amount of the pigment is, for example, 0.5 to 10 parts by mass, preferably 1 to 5 parts by mass with respect to 100 parts by mass of the thermosetting resin.

Next, a method for producing the flame-retardant resin composition according to the present embodiment will be described.

The method for producing the flame-retardant resin composition according to the present embodiment is not particularly limited. For example, when the thermosetting component and other optional components are in liquid form, the components are mixed by stirring with a stirring spring using a Three-One Motor or the like.

Alternatively, when the thermosetting component and other optional components are solid, the components are mixed using a mixer or the like, and then melt-kneaded by heating to approximately 90°C to 120°C using a heating kneader, hot rolls, an extruder, or the like. As conditions for the heating and kneading, for example, the number of roll passes is preferably 20 to 40 times, and the rotation speed is preferably 14 to 20 rpm. Next, the obtained kneaded product is cooled and pulverized to obtain a powdery or granular resin composition. As necessary, the resin composition may be subjected to tableting molding after the pulverization, or formed into a sheet shape by, for example, vacuum lamination molding or compression molding after the pulverization.

### <Molded article and cured product>

A molded article according to the present embodiment is one using the cured product of the flame-retardant resin composition, and is suitable for applications requiring flame retardancy. Specific examples thereof include transportation equipment such as cars, aircraft, railway vehicles, and ships; buildings; office equipment; general-purpose machines; household electrical appliances; and various structural members such as electrical equipment. Among these, it is particularly suitable as a vehicle-mounted component.

A cured product (complete cure) of the flame-retardant resin composition can be obtained, for example, by heating the flame-retardant resin composition at 165°C to 175°C for 0.5 to 10 minutes.

The embodiments of the present invention have been described above, but these are examples of the present invention and various configurations other than the above can be adopted. In addition, the present invention is not limited to the above-described embodiments, and modifications, improvements, and the like within the range in which the object of the present invention can be achieved are included in the present invention.

### EXAMPLES

Embodiments of the present invention will be described in detail based on Examples and Comparative Examples. The present invention is not limited to the examples.

### (1) Raw materials of flame-retardant resin composition

A flame-retardant resin composition was prepared using the following raw materials.

### [Raw materials]

### (Thermosetting resin)

· Phenolic resin 1: resol-type phenolic resin, "PR-53529" manufactured by Sumitomo Bakelite Co., Ltd.
· Diallyl isophthalate resin 1: manufactured by Osaka Soda Co., Ltd., DAISO ISO DAP, weight-average molecular weight (in terms of polystyrene): 3 × 10⁴ to 5 × 10⁴, iodine value: 75 to 90, softening point: 50°C to 80°C, having a chemical structure represented by Formula (1) 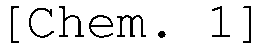 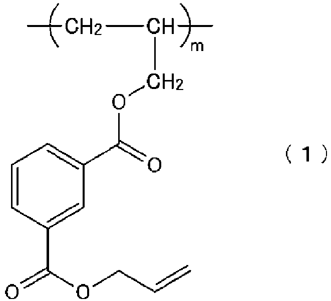
· Diallyl orthophthalate resin 1: manufactured by Osaka Soda Co., Ltd., DAISO DAP K, weight-average molecular weight (in terms of polystyrene): 2 × 10⁴ to 3 × 10⁴, iodine value: 50 to 60, softening point: 65°C to 100°C, having a chemical structure represented by Formula (2) 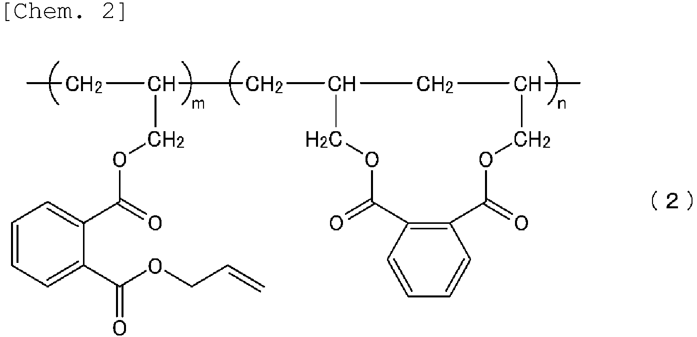
· Unsaturated polyester resin 1: unsaturated polyester resin, tere-type, 8523, manufactured by Japan U-Pica Co., Ltd.
· Unsaturated polyester resin 2: unsaturated polyester resin, iso-type, 8510, manufactured by Japan U-Pica Co., Ltd.

### (Curing agent)

· Curing agent 1: hexamethylenetetramine: "HEXAMINE" manufactured by CHANG CHUN PETROCHEMICAL CO., LTD.

### (Curing aid)

· Curing aid 1: calcium hydroxide: "Slaked lime SA074" manufactured by Chichibu Lime Industry Co., Ltd.

### (Polymerization initiator)

· Polymerization initiator 1: organic peroxide (thermal decomposition temperature (decomposition temperature at which a half-life of 1 minute is obtained): 175°C)

### (Monomer)

· Diallyl phthalate compound 1: manufactured by Osaka Soda Co., Ltd., product name: DAISO DAP 100 MONOMER, having a chemical structure represented by Formula (3)

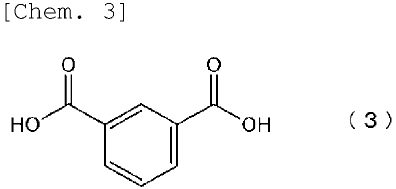

### (Flame retardant)

· Organic flame retardant 1: aromatic condensed phosphate ester, "PX-200" manufactured by Daihachi Chemical Industry Co., Ltd.
· Organic flame retardant 2: melamine polyphosphate, "MPP-A" manufactured by Sanwa Chemical Co., Ltd.
· Organic flame retardant 3: phenyl silicone resin, "RSN-6018" manufactured by Dow Toray Co., Ltd.
· Organic flame retardant 4: methyl silicone resin, "SILRES (registered trademark) MK," manufactured by Asahi Kasei Wacker Silicone Co., Ltd.
· Inorganic flame retardant 5: aluminum hydroxide, C-308, manufactured by Sumitomo Chemical Co., Ltd., average particle size d₅₀ = 8 µm
· Inorganic flame retardant 6: aluminum hydroxide, C-31, manufactured by Sumitomo Chemical Co., Ltd., average particle size d₅₀ = 50 µm
· Combined organic/inorganic flame retardant 7: mixture of ethylene bis(tetrabromophthalimide) and antimony trioxide

### (Inorganic filler)

· Inorganic filler 1: glass fiber, "CS3E479" manufactured by Nitto Boseki Co., Ltd.
· Inorganic filler 2: clay, "SP33," BASF South East Asia Pte. Ltd.
· Inorganic filler 3: calcium carbonate, TANCAL NS#100, manufactured by Nitto Funka Kogyo K.K.

### (Additive)

· Additive 1 (release agent): calcium stearate "Ca-St" manufactured by Nitto Kasei Kogyo K.K.
· Additive 2 (pigment): carbon black "Carbon Black #750" manufactured by Mitsubishi Chemical Corporation

### (2) Production of flame-retardant resin composition

### <Examples 1 to 11 and Comparative Examples 1 and 2>

Each component was mixed at a blending ratio (parts by mass) and a roll rotational speed shown in Table 1 to produce a flame-retardant resin composition.

### (3) Measurement of color difference

(i) A test plate (having a size of 120 mm by 120 mm and a thickness of 2 mm) was formed by using each obtained flame-retardant resin composition under conditions of a mold temperature of 175°C and a curing time of 3 minutes.
(ii) A torch burner ("Power Torch RZ-720E" manufactured by Shinfuji Burner Co., Ltd., 2.2 kW) (30 mm with respect to a flame length of approximately 100 mm) was applied to a center of one surface of the test plate placed vertically such that an angle with respect to the test plate was 90°, and the test plate was exposed to flame for 5 minutes.
(iii) For a center of another surface of the test plate and two points located on a straight line passing through the center of the other surface and at a distance of 3 mm from the center, color differences before the flame exposure and after the flame exposure were respectively measured, and an average value (ΔEr) thereof was determined.
(iv) Separately, for the center of the one surface of the test plate obtained in (ii) of the procedure and two points located on a straight line passing through the center of the one surface and at a distance of 3 mm from the center, color differences before the flame exposure and after the flame exposure were respectively measured, and an average value (ΔEf) thereof was determined.

"CR-241" manufactured by Konica Minolta, Inc. was used for measuring the color difference.

### (4) UL-94 standard

A test plate (having a size of 125 mm x 13 mm and a thickness of 0.75 mm) was formed by using the flame-retardant resin composition under conditions of a mold temperature of 175°C and a curing time of 3 minutes, and a test was conducted in accordance with the UL-94 standard. The results are shown in Table 1.

### (5) Evaluation

Using the flame-retardant resin composition, a test plate (having a size of 120 mm by 120 mm and a thickness of 2 mm) was formed under conditions of a mold temperature of 175°C and a curing time of 3 minutes; a torch burner ("Power Torch RZ-720E," 2.2 kW, manufactured by Shinfuji Burner Co., Ltd.) (30 mm with respect to a flame length of approximately 100 mm) was applied to the center of one surface (front surface) of the vertically positioned test plate such that an angle with respect to the test plate was 90°; and the test plate was exposed to flame for 5 minutes.

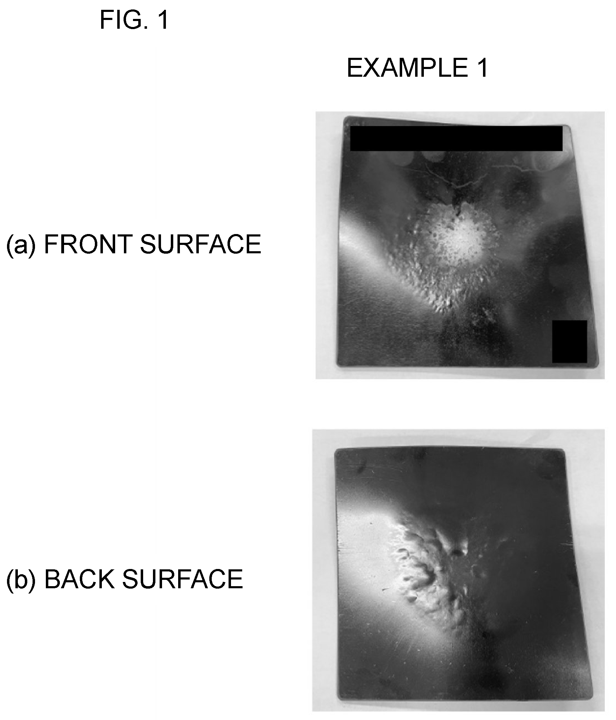

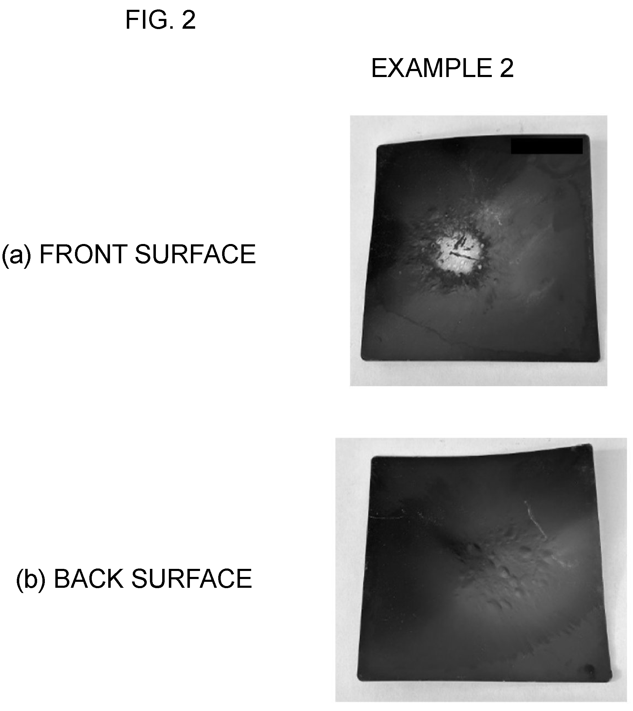

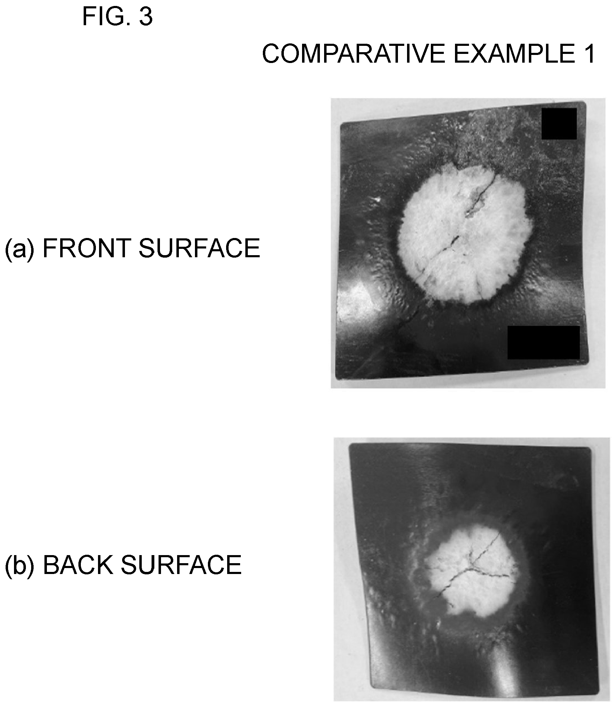

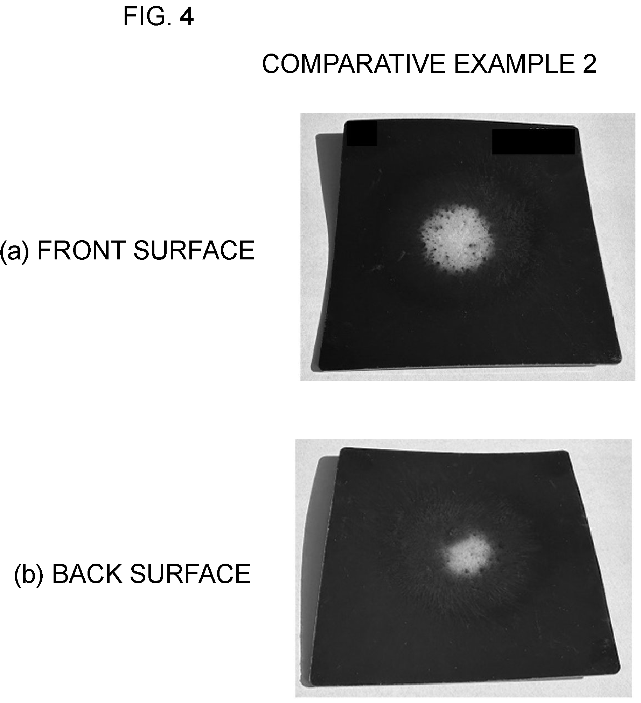

For the test plate after the flame exposure, an ashing area was calculated, and "flame retardancy" was evaluated according to the following criteria. Specifically, the front surface and the back surface of the test plate were visually observed, and an area turned grayish white was defined as ashing. The results are shown in Table 1. In addition, as representative examples showing the results of the flame retardancy evaluation of the test plates, photographs of the front surfaces and the back surfaces of the test plates of Example 1, Example 2, Comparative Example 1, and Comparative Example 2 are shown in FIGS. 1 to 4, respectively. In the photographic views of FIGS. 1 to 4, some masking was applied to a region not related to the flame retardancy evaluation.
○: No ashing
△: Ashing present; ashing area of less than 20 cm²
×: Ashing present; ashing area of 20 cm² or more

**[Table 1-1]**

| | | | Example 1 | Example 2 | Example 3 | Example 4 | Example 5 | Example 6 | Example 7 | Example 8 | Example 9 | Example 10 | Example 11 | Comparative Example 1 | Comparative Example 2 |
|---|---|---|---|---|---|---|---|---|---|---|---|---|---|---|---|
| Flame-retardant resin composition (part by mass) | Thermosetting resin | Phenolic resin 1 | 31 | 31 | 31 | 31 | 31 | 31 | 17 | 17 | | | | 36 | 17 |
| | | Diallyl isophthalate resin 1 | | | | | | | | | 30.5 | | | | |
| | | Diallyl orthophthalate resin 1 | | | | | | | | | | 8 | 8 | | |
| | | Unsaturated polyester resin 1 | | | | | | | | | | 7 | 7 | | |
| | | Unsaturated polyester resin 2 | | | | | | | | | | 11 | 11 | | |
| | Curing aid | Curing aid 1 | 1 | 1 | 1 | 1 | 1 | 1 | 1 | 1 | | | | 1 | 1 |
| | Polymerization initiator | Polymerization initiator 1 | | | | | | | | | 1.1 | 1 | 1 | | |
| | Monomer | Diallyl phthalate compound 1 | | | | | | | | | 0.3 | | | | |
| | Curing agent | HEXAMINE | | | | | | | 1 | 1 | | | | | |
| | Flame retardant | Organic flame retardant 1 | 5 | 3 | | | | | 2 | | | | | | 1 |
| | | Organic flame retardant 2 | | | 5 | 3 | | | | 2 | | | | | |
| | | Organic flame retardant 3 | | | | | 5 | | | | | | | | |
| | | Organic flame retardant 4 | | | | | | 5 | | | | | | | |
| | | Organic flame retardant 5 | | | | | | | | | 18.4 | 16 | 10 | | |

**[Table 1-2]**

| | | | Example 1 | Example 2 | Example 3 | Example 4 | Example 5 | Example 6 | Example 7 | Example 8 | Example 9 | Example 10 | Example 11 | Comparative Example 1 | Comparative Example 2 |
|---|---|---|---|---|---|---|---|---|---|---|---|---|---|---|---|
| Flame-retardant resin composition (part by mass) | Flame retardant | Organic flame retardant 6 | | | | | | | | | | 16 | 22 | | |
| | | Combined organic/inorganic flame retardant 7 | | | | | | | | | 8.2 | | | | |
| | Inorganic filler | Inorganic filler 1 | 57 | 57 | 57 | 57 | 57 | 57 | 43 | 43 | 40 | 35 | 35 | 57 | 44 |
| | | Inorganic filler 2 | 3 | 5 | 3 | 5 | 3 | 3 | 34 | 34 | | | | 3 | 35 |
| | | Inorganic filler 3 | | | | | | | | | | 3 | 3 | | |
| | Additive | Additive 1 | 2 | 2 | 2 | 2 | 2 | 2 | 1 | 1 | 1.1 | 2 | 2 | 2 | 1 |
| | | Additive 2 | 1 | 1 | 1 | 1 | 1 | 1 | 1 | 1 | 0.6 | 1 | 1 | 1 | 1 |
| Production method | Number of roll passes (times) | | 30 | 30 | 30 | 30 | 30 | 30 | 30 | 30 | 30 | 30 | 30 | 30 | 30 |
| Properties | ΔEr | - | 15 | 20 | 15 | 20 | 15 | 15 | 8 | 8 | 12 | 20 | 22 | 65 | 32 |
| | ΔEf | - | 65 | 65 | 65 | 65 | 65 | 65 | 55 | 55 | 25 | 68 | 68 | 65 | 55 |
| | UL94 standard | - | V-1 | V-1 | V-1 | V-1 | V-1 | V-1 | Not performed | Not performed | Not performed | Not performed | Not performed | Not performed | Not performed |
| Evaluation | Front surface ashing | - | Δ | Δ | Δ | Δ | Δ | Δ | Δ | Δ | Δ | Δ | Δ | × | Δ |
| | Back surface ashing | - | ○ | ○ | ○ | ○ | ○ | ○ | ○ | ○ | ○ | ○ | ○ | × | Δ |

Priority is claimed on Japanese Patent Application No. 2024-007884, filed January 23, 2024, the disclosure of which is incorporated herein by reference.

## Claims

1. A flame-retardant resin composition comprising:
a thermosetting resin; and
a flame retardant,
wherein ΔEr obtained by the following procedure is 30 or less,
procedure:
(i) forming a test plate (having a size of 120 mm by 120 mm and a thickness of 2 mm) by using the flame-retardant resin composition under conditions of a mold temperature of 175°C and a curing time of 3 minutes;
(ii) applying a torch burner (30 mm with respect to a flame length of approximately 100 mm) to a center of one surface of the test plate placed vertically such that an angle with respect to the test plate is 90°, and exposing the test plate to flame for 5 minutes; and
(iii) measuring, for a center of another surface of the test plate and two points located on a straight line passing through the center of the other surface and at a distance of 3 mm from the center, color differences before the flame exposure and after the flame exposure, and determining an average value (ΔEr) of the color differences.

2. The flame-retardant resin composition according to Claim 1,
wherein the flame retardant includes one or more selected from an organic flame retardant and an inorganic flame retardant.

3. The flame-retardant resin composition according to Claim 1 or 2, further comprising:
an inorganic filler.

4. The flame-retardant resin composition according to any one of Claims 1 to 3,
wherein ΔEf is 0 to 100, ΔEf being obtained by measuring, for the center of the one surface of the test plate obtained in (ii) of the procedure and for two points located on a straight line passing through the center of the one surface and at a distance of 3 mm from the center, color differences before the flame exposure and after the flame exposure, and determining an average value (ΔEf) of the color differences.

5. The flame-retardant resin composition according to any one of Claims 1 to 4,
wherein a content of the flame retardant is 1 to 45 parts by mass with respect to 100 parts by mass of the flame-retardant resin composition.

6. The flame-retardant resin composition according to any one of Claims 1 to 5,
wherein the thermosetting resin includes one or more selected from a phenolic resin, a diallyl phthalate resin, an unsaturated polyester resin, an epoxy resin, a melamine resin, and a furan resin.

7. The flame-retardant resin composition according to Claim 3,
wherein the inorganic filler is one or more selected from a fibrous filler, a plate-like filler, and a spherical filler.

8. The flame-retardant resin composition according to Claim 3 or 7,
wherein the inorganic filler is one or more selected from a glass fiber, a carbon fiber, a metal fiber, and a mineral filler.

9. The flame-retardant resin composition according to Claim 3, 7, or 8,
wherein a content of the inorganic filler is 30 to 85 parts by mass with respect to 100 parts by mass of the flame-retardant resin composition.

10. The flame-retardant resin composition according to any one of Claims 1 to 9,
wherein, when the flame-retardant resin composition is formed into a test plate (having a size of 125 mm × 13 mm and a thickness of 0.75 mm) under conditions of a mold temperature of 175°C and a curing time of 3 minutes, the flame-retardant resin composition meets V-1 of UL-94 standard in a test conducted in accordance with the UL-94 standard.

11. The flame-retardant resin composition according to any one of Claims 1 to 10,
wherein the flame-retardant resin composition is used for a vehicle-mounted component.

12. A cured product of the flame-retardant resin composition according to any one of Claims 1 to 10.

13. A vehicle-mounted component comprising:
the cured product of the flame-retardant resin composition according to Claim 11.
